# EUROPEAN PATENT APPLICATION

(11) **EP 0 874 324 A2**
(43) Date of publication of application: **28.10.1998**
(21) Application number: 98302941.4
(22) Date of filing: 16.04.1998
(51) Int. Cl.: G06F 17/60, G06F 17/21

(54) **System and method of processing data for display on an electronic price label**

(30) Priority: 25.04.1997 US 846161
(71) Applicant: NCR INTERNATIONAL INC., Dayton, Ohio 45479 (US)
(72) Inventor: Zimmerman, Terry Lee, Lawrenceville, Georgia 30043 (US); Nycz, Lew Peter, Kinnelon, New Jersey 07405 (US); Berman, Robert Michael, Lawrenceville, Georgia 30043 (US)
(74) Representative: Irish, Vivien Elizabeth

(57) **Abstract**

A system and method of processing promotional data from a host computer (32) for display on an electronic price label (EPL) (14) controlled by a further computer (12). The computer (12) obtains the promotional data from the host computer (32) in a first format, determines whether the first format is equal to a second format required by the EPL computer, reformats the promotional data into the second format if the first format is different from the second format, and stores the promotional data in the EPL data file. The computer (12) may additionally verify that the promotional data is associated with the EPLs.

## Description

The present invention relates to electronic signage, and more specifically to a system and method of processing promotional data from a host computer for display on an electronic price label (EPL).

EPL systems typically include a plurality of EPLs for each merchandise item in a transaction establishment. EPLs typically display the price of corresponding merchandise items on transaction establishment shelves and are typically attached to a rail along the leading edge of the shelves. A transaction establishment may contain thousands of EPLs to display the prices of the merchandise items. The EPLs are coupled to a central server from where information about the EPLs is typically maintained in an EPL data file. Price information displayed by the EPLs is obtained from the PLU file.

Retailers typically want to display more than the price on EPLs. In the case of a "sale" or other special promotion, a retailer may wish to display promotional information such as, "WAS 1.69/SAVE .30", along with the current price.

Promotional information may be delivered from a host site to one or more transaction establishments. Promotional information delivered in this way may be in a format that is incompatible with the EPL system in the transaction establishment.

Therefore, it is the object of the invention to provide a system and method of processing promotional data from a host computer which check the format of the promotional data and reformats it if necessary.

According to the invention a method of processing promotional data obtained from a host computer in a first format for display by an electronic price label (EPL) in an EPL system characterized by the steps of:
(a) determining whether the first format is equal to a second format required by the EPL system;
(b) if the first format is different from the second format, reformatting the promotional data into the second format required by the EPL system; and
(c) storing the promotional data in an EPL data file maintained by the EPL system.

Also according to the invention an electronic price label (EPL) system comprising:
a plurality of EPLs for displaying prices and promotional data; and
a computer coupled to the EPLs which maintains an EPL data file containing EPL identification information associated with the EPLs;
characterized in that the computer is arranged to obtain the promotional data from a host computer in a first format, to reformat the promotional data into a second format required by the EPL computer, and to associate the promotional data with the EPLs.

The invention will now be described by way of example with reference to the accompanying drawings, in which:
Fig. 1 is a block diagram of transaction system including an EPL system;
Fig. 2 is a perspective view of an EPL displaying a promotional message; and
Fig. 3 is a flow diagram illustrating a system and method of processing promotional data from a host computer for display on an EPL.

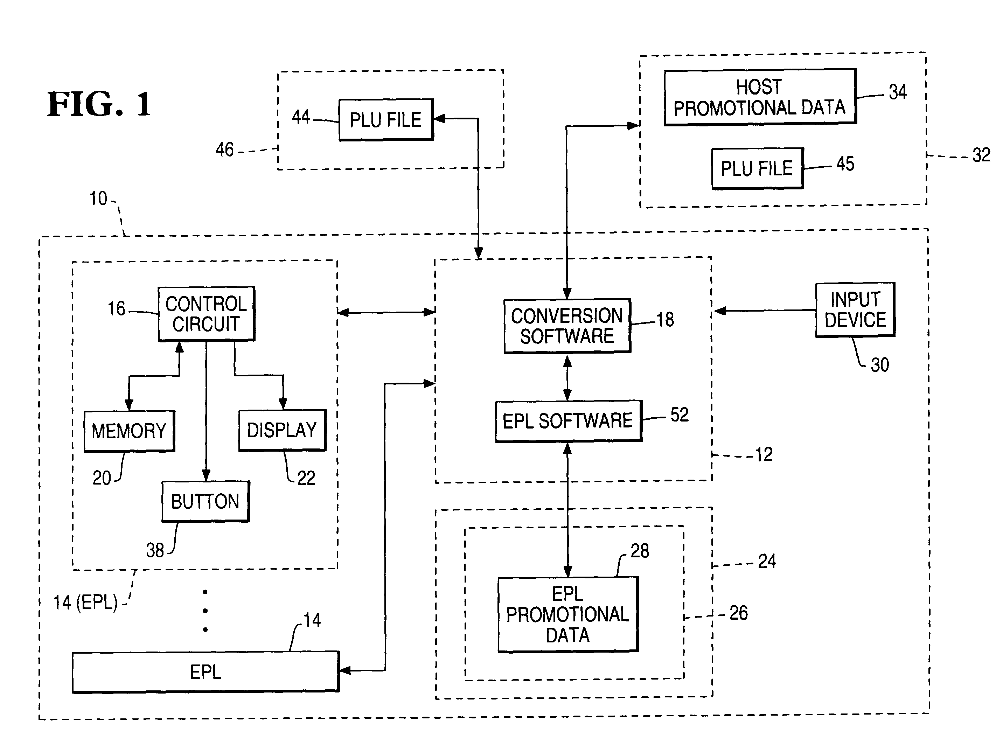

Referring now to Fig. 1, electronic price label (EPL) system 10 includes EPL computer 12 and a plurality of EPLs 14. EPL system 10 may include wireless communication, cable communication, or a combination of both.

EPL computer 12 executes EPL software 30 which records, schedules, and transmits all messages to EPLs 14 and analyzes status messages from EPLs 14. Messages from EPL computer 12 include price change messages, diagnostic messages, and promotional messages.

EPL computer 12 maintains and uses EPL data file 26, which contains item information, EPL identification information, and promotional data 28 for EPLs 14. Alternatively, promotional data 28 may be located in a separate file, instead of being integrated with other data in EPL data file 26.

EPL computer 12 transmits a message containing a particular promotional message and a command to display the promotional message.

An example of a promotional message is "/BUY ONE/ GET ONE", where the slashes indicate blinking, flashing, or scrolling. Control circuit 16 may display price separately, or as an integral part of a promotional message.

EPL data file 26 includes records for each EPL 14. Records of those EPLs which display promotional messages include the promotional records to be displayed. If a separate file is used to store promotional messages instead, the EPL records include promotional indicators which uniquely identify promotional messages within such a file. A message may be assigned to an EPL by storing the associated promotional indicator in the EPL's record in EPL data file 26. Sample promotional message formats are shown in Table I, where data 1-4 refer to data registers within an EPL.

**Table I**

| | |
|---|---|
| Data | Explanation |
| PLU/Item # | PLU Item that message is desired |
| Data1 | Data stored in data register 1 |
| Flag | P if promotional message, R if register data (push button), N if no data |
| Register Data | Data to be displayed |
| Symbol C1 | Square |
| Symbol C2 | Triangle |
| L/ | / on left hand side of display |
| R/ | / on right hand side of display |
| Bar | \| in center of EPL |
| Data2 | Data stored in data register 2 |
| Flag | P if promotional message, R if register data (push button), N if no data |
| Register Data | Data to be displayed |
| Symbol C1 | Triangle or Square |
| Symbol C2 | Square or Triangle |
| L/ | / on left hand side of display |
| R/ | / on right hand side of display |
| Bar | \| in center of EPL |
| Data3 | Data stored in data register 3 |
| Flag | P if promotional message, R if register data (push button), N if no data |
| Register Data | Data to be displayed |
| Symbol C1 | Square |
| Symbol C2 | Triangle |
| L/ | / on left hand side of display |
| R/ | / on right hand side of display |
| Bar | \| in center of EPL |
| Promotion Start Date Date | Promotion Will Start (optional) |
| Promotion Start Time | Time Promotion Will Start (optional) |
| Promotion End Date | Date Promotion Will End (optional) |
| Promotion End Time | Time Promotion Will End (optional) |
| Duty Time | Blink Time if Promotional Message |

EPL computer 12 executes conversion software 18 which receives host promotional data from host computer 32 and processes host promotional data to create EPL promotional data entries within EPL data file 26.

Host promotional data 34 contains identification numbers for promotional items, which are obtained from a price look-up (PLU) file 45. Host promotional data 34 contains a list of EPL data registers to be displayed, and promotional information to be loaded into the EPL data registers.

Conversion software 18 determines whether host promotional data 34 is in a format that can be readily inserted into EPL data file 26. If it is not, conversion software 18 reformats host promotional data 34 into data that can be entered into EPL data file 26.

EPL computer 12 can receive data, including host promotional data 34, from multiple host computers and/or applications at the same time. For example, a host computer may send a file which contains "sale" (special promotion) promotional data. A category management application program may additionally send files containing stocking information, such as minimum and maximum numbers on the shelf. Another application package may send planogram information, such as the number of facings. Conversion software 18 reads each of the associated files, extracts pertinent information, and if an EPL is associated with the PLU affected, convert the information to a required promotional data format.

Processing also involves determining whether an EPL is associated with the PLU number listed in a particular record within host promotional data 34. Conversion software 18 reads EPL data file 26 to search for the PLU number. If the PLU number is not contained within EPL data file 26, then the record is ignored and the next record in host promotional data 34 is examined. If the PLU number is contained within EPL data file 26, then control software 40 causes the promotional information in the record to be transmitted to the corresponding EPL.

Promotional data may also be processed and entered by hand and later modified using input device 30, which may be a keyboard.

EPL software 30 reads the information, adds the information to EPL data file 26, and sends promotional messages to the EPL module.

Host computer 32 may be co-located and linked to one EPL computer 12 in a single transaction establishment or be coupled to a plurality of EPL computers 12 in a plurality of different transaction establishments. Host computer 32 and EPL computer 12 are linked through any known method, such as through a network or telephone system. PLU file 45 is maintained by host computer 32, but when host computer 32 controls prices for many transaction establishments, each transaction establishment also includes a transaction server 46 with its own PLU file 44.
Storage medium 24 stores EPL data file 26.
EPLs 14 include control circuit 16, memory 20, and display 22.

Control circuit 16 controls the internal operation of EPLs 14. Control circuit 16 stores received messages from EPL computer 12 and transmits response messages to EPL computer 12. Control circuit 16 also controls the display of price and promotional messages, including blinking.

Memory 20 preferably includes a plurality of data registers. This embodiment includes four data registers. Memory 20 stores promotional data and other data necessary for the proper operation of EPL system 10.

Upon receiving a message containing promotional data, control circuit 16 stores the promotional data in memory 20. In this embodiment, the fourth register is used. Upon receiving an instruction to display a particular promotional message, control circuit 16 retrieves the promotional message from memory 20 and displays it using display 22. Alternatively, EPLs 14 may optionally include button 38 for allowing an operator at the location of EPLs 14 to select messages to be displayed. Examples of information that might be loaded in the data registers and only displayed when push button 38 is engaged are inventory count, stock location, location and/or number of facings for stocking or resets.

Display 22 displays price and promotional messages. Display 22 is preferably a liquid crystal display (LCD).

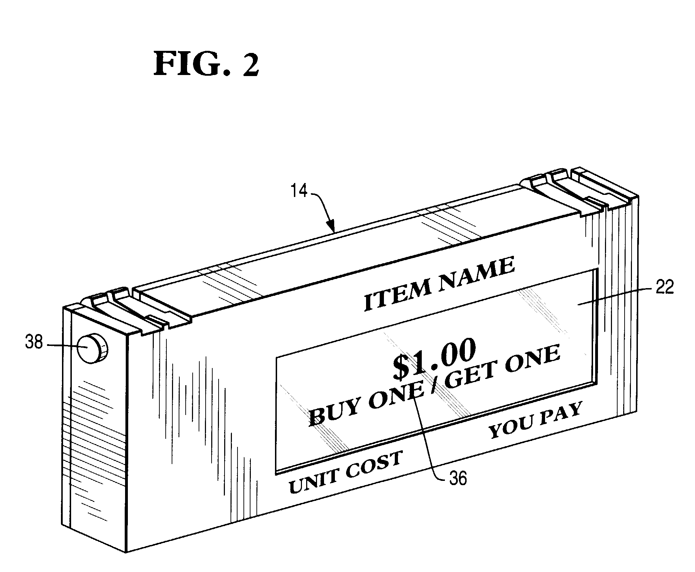

Turning now to Fig. 2, one of EPLs 14 is shown in more detail. The promotional message 36 is shown as "/BUY ONE/ GET ONE".

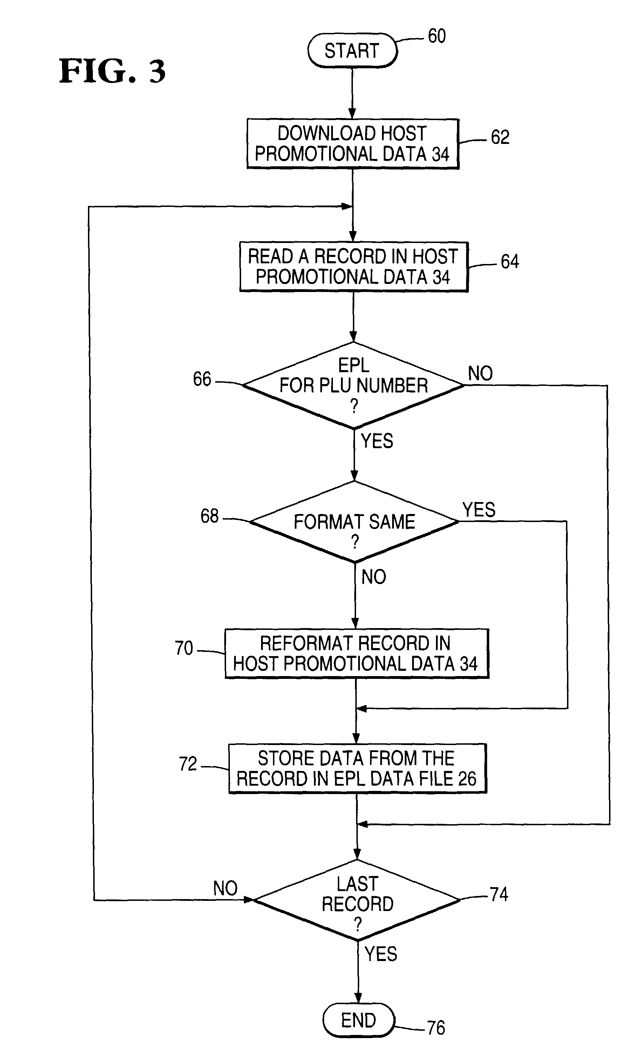

Turning now to Fig. 3, the processing method of the present invention is illustrated beginning with START 60.

In step 62, host computer 32 downloads host promotional data 34 to EPL computer 12.

In step 64, conversion software 18 reads a record in host promotional data 34.

In step 66, conversion software 18 examines the record to determine whether an EPL is associated with the PLU number in the record. Conversion software 18 reads EPL data file 26 to search for the PLU number. If the PLU number is not contained within EPL data file 26, then the record is ignored and operation proceeds to step 74. If the PLU number is contained within EPL data file 26, then operation proceeds to step 68.

In step 68, conversion software 18 examines the format of record in host promotional data 34 to determine whether it is in the format required by EPL system 10. If it is, then operation proceeds to step 72. If it is not, then operation proceeds to step 70.

In step 70, conversion software 18 reformats host promotional data 34 into a format that facilitates entry of host promotional data 34 into EPL data file 26.

In step 72, conversion software 18 stores data from the record in EPL data file 26. EPL software 30 reads EPL data file 26 and transmits the data to the EPL.

In step 74, conversion software 18 determines whether the record is the last record in host promotional data 34. If not, operation returns to step 64 to read another record. If so, operation ends at END 76.

## Claims

1. A method of processing promotional data obtained from a host computer in a first format for display by an electronic price label (EPL) in an EPL system characterized by the steps of:
(a) determining (62,64,66,68) whether the first format is equal to a second format required by the EPL system;
(b) if the first format is different from the second format, reformatting (70) the promotional data into the second format required by the EPL system; and
(c) storing (72) the promotional data in an EPL data file maintained by the EPL system.

2. A method according to claim 1 in which step (a) is performed by the Substeps of:
reading (64) the promotional data to obtain an item identification number;
determining (66) whether an EPL is associated with the item identification number; and
if an EPL is associated with the item identification number, determining (68) whether the first format is equal to a second format required by the EPL system.

3. An electronic price label (EPL) system (10) comprising:
a plurality of EPLs (14) for displaying prices and promotional data; and
a computer (12) coupled to the EPLs which maintains an EPL data file (26) containing EPL identification information associated with the EPLs;
characterized in that the computer is arranged to obtain the promotional data from a host computer (32) in a first format, to reformat the promotional data into a second format required by the EPL computer, and to associate the promotional data with the EPLs.
